# EUROPEAN PATENT APPLICATION

(11) **EP 4 513 647 A1**
(43) Date of publication of application: **26.02.2025**
(21) Application number: 24724427.0
(22) Date of filing: 15.04.2024
(51) Int. Cl.: H01M 50/256, H01M 50/284, H01M 50/247, H01M 50/183

(54) **BATTERY COMPRISING HANDLE, AND ELECTRONIC DEVICE COMPRISING BATTERY**

(30) Priority: 06.07.2023 KR 20230087635; 11.08.2023 KR 20230105793
(71) Applicant: Samsung Electronics Co., Ltd., Suwon-si, Gyeonggi-do 16677 (KR)
(72) Inventor: KIM, Hyogon, Suwon-si Gyeonggi-do 16677 (KR); KIM, Youngju, Suwon-si Gyeonggi-do 16677 (KR); KIM, Myeongho, Suwon-si Gyeonggi-do 16677 (KR); JEON, Yongsub, Suwon-si Gyeonggi-do 16677 (KR)
(74) Representative: Gulde & Partner
(86) International application number: PCT/KR2024/005024
(87) International publication number: WO 2025/009703

(57) **Abstract**

Provided are a battery including a handle and an electronic device including the battery. The battery includes a pouch case including an upper surface case having an accommodation part formed therein to accommodate a battery assembly, and a lower surface case which is bent and extends from the upper surface case to surround the accommodation part. The pouch case includes a handle part extending from an edge of at least one of the upper surface case and the lower surface case. The handle part is bent in a direction to surround a region of the pouch case.

## Description

### [Technical Field]

Embodiments of the document relate to a battery and an electronic device and, for example, relate to a battery including a separation structure and an electronic device including the battery.

### [Background Art]

As electronic devices perform various functions and have improved performance, a secondary battery capable of being charged and discharged is included therein. In addition, as electronic devices become more compact and slimmer, a battery having an integrated structure not separated in a normal use environment is included in electronic devices. However, in case that repair is required due to failure of an electronic device or the battery life has expired, there is a need for a user to separate the battery from the electronic device.

The above-mentioned information can be provided as a related art for helping an understanding of the disclosure. No determination has been made, and no assertion is made, as to whether any of the above-mentioned information might be applicable as a prior art with regard to the disclosure.

### [Disclosure of Invention]

### [Solution to Problem]

A battery according to various embodiments of the document includes a pouch case including an upper surface case having an battery assembly accommodation part formed therein to accommodate a battery assembly, and a lower surface case which is bent and extends from the upper surface case to surround the battery assembly accommodation part. The upper surface case may include one bent edge bent from the lower surface case and multiple cut edges other than the bent edge. The pouch case includes a handle part extending from an edge of at least one of the upper surface case and the lower surface case. The handle part is bent in a direction to surround a region of the pouch case.

An electronic device according to various embodiments of the document includes a battery and a mechanical member including a battery accommodation part configured to accommodate the battery. The battery includes a pouch case including an upper surface case having a battery assembly accommodation part formed therein to accommodate a battery assembly, and a lower surface case surrounding the battery assembly accommodation part. The pouch case includes a handle part extending from an edge of at least one of the upper surface case and the lower surface case. The handle part is bent in a direction to surround a region of the pouch case. The lower surface case is formed to be seated in the battery accommodation part.

### [Brief Description of Drawings]

FIG. 1 is a block diagram of an electronic device in a network environment according to various embodiments.
FIG. 2A, FIG. 2B, FIG. 2C, FIG. 2D, FIG. 2E, FIG. 2F, and FIG. 2G are views showing a battery manufacturing process according to various embodiments.
FIG. 3A, FIG. 3B, FIG. 4A, FIG. 4B, FIG. 5A, FIG. 5B, FIG. 5C, FIG. 6A, and FIG. 6B are views showing a handle part according to various embodiments.
FIG. 7A, FIG. 7B, and FIG. 7C are views showing a cross section of a battery according to various embodiments.
FIG. 8 is a view showing a battery according to various embodiments.
FIG. 9A, FIG. 9B, and FIG. 9C are views showing a process of separating a battery according to various embodiments.

### [Mode for the Invention]

Hereinafter, in order to enable the disclosure to be easily implemented by a person skilled in the art in the technical field belonging to the disclosure, embodiments of the disclosure will be described in detail with reference to the drawings. However, the disclosure may be implemented in various other types and is not limited to the embodiments disclosed herein. In describing the drawings, identical or similar reference numerals may be used for identical or similar elements. In addition, in relation to the descriptions of drawings or the descriptions related thereto, descriptions of well-known functions and configurations may be omitted for clarity and conciseness.

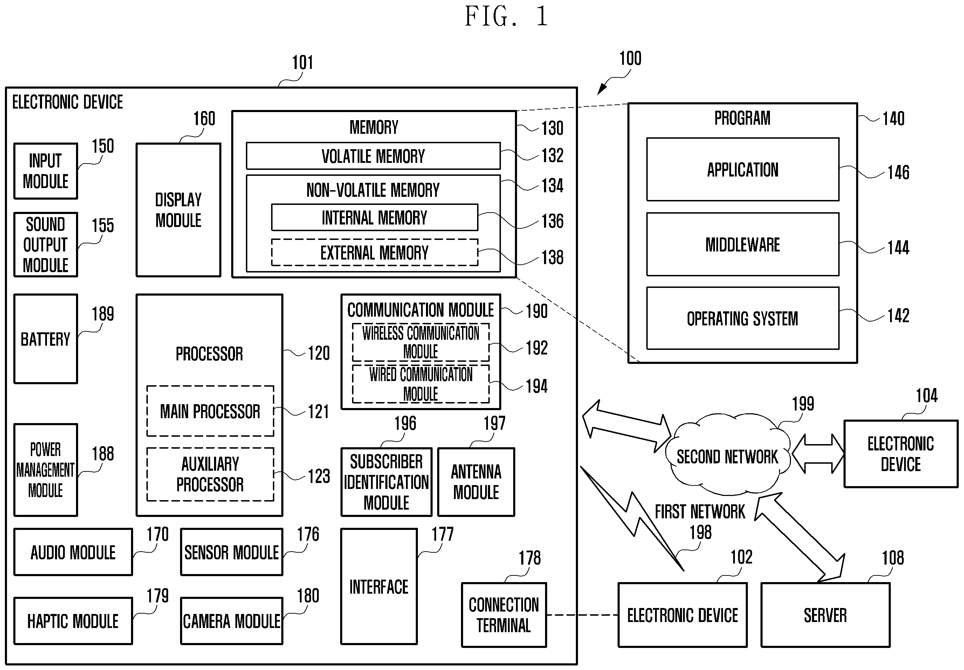

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connection terminal 178, a haptic module 179, a camera module 180, a power management module 188, a battery 189, a communication module 190, a subscriber identification module (SIM) 196, or an antenna module 197. In some embodiments, at least one of the components (e.g., the connection terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134. The non-volatile memory may include at least one of an internal memory 136 and an external memory 138.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., the electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

The connection terminal 178 may include a connector via which the electronic device 101 may be physically connected with the external electronic device (e.g., the electronic device 102). According to an embodiment, the connection terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a fifth generation (5G) network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a fourth generation (4G) network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the millimeter wave (mmWave) band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20 gigabits per second (Gbps) or more) for implementing eMBB, loss coverage (e.g., 164 decibels (dB) or less) for implementing mMTC, or U-plane latency (e.g., 0.5 milliseconds (ms) or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form an mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices (e.g. electronic devices 102 and 104 or the server 108). For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In an embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or loT-related technology.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

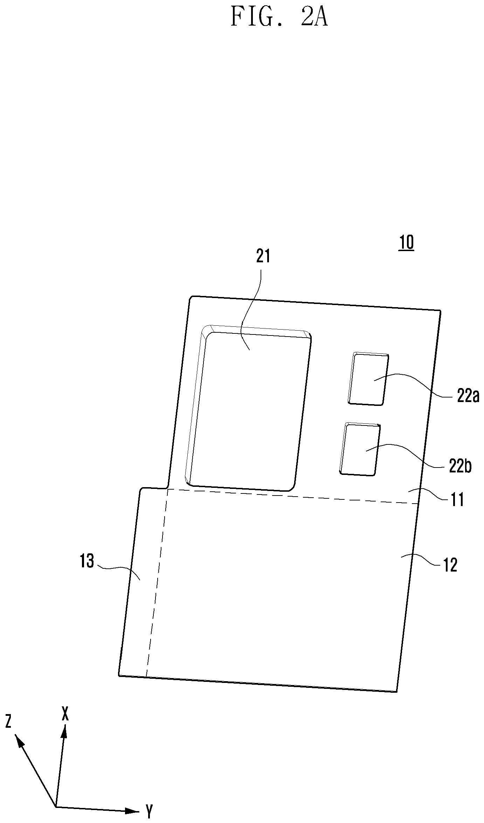

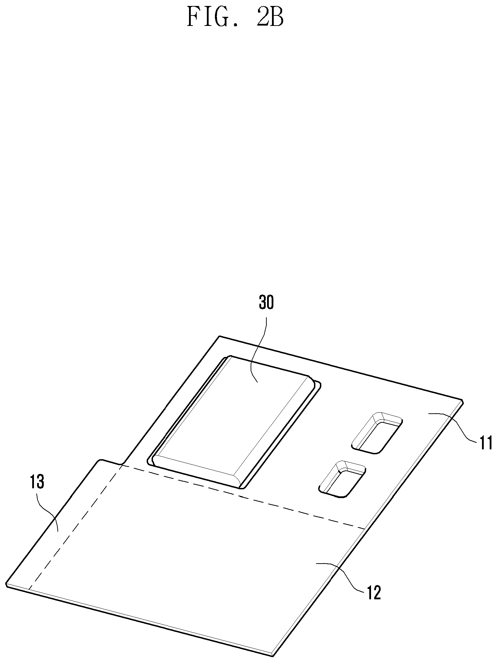

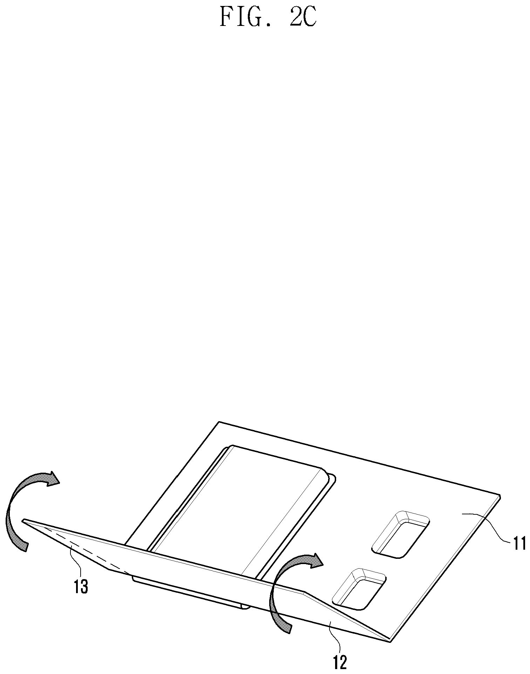

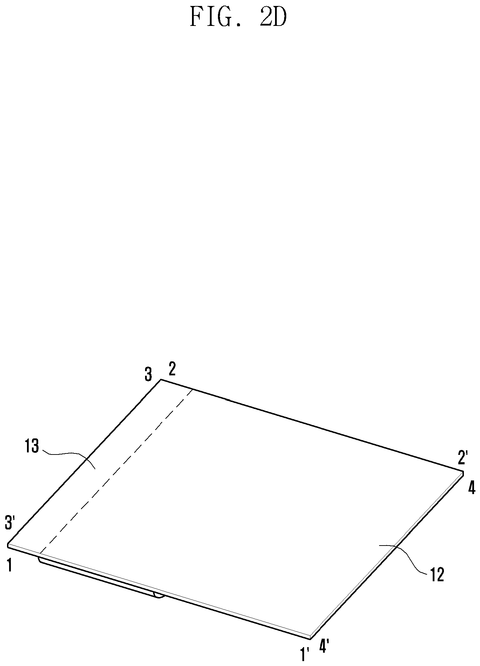

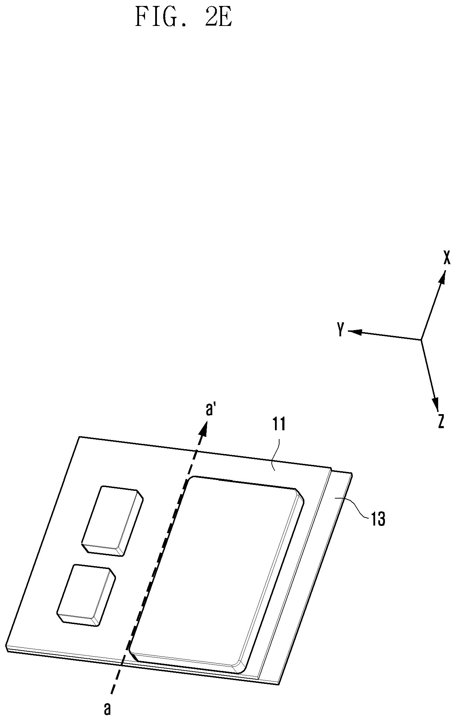

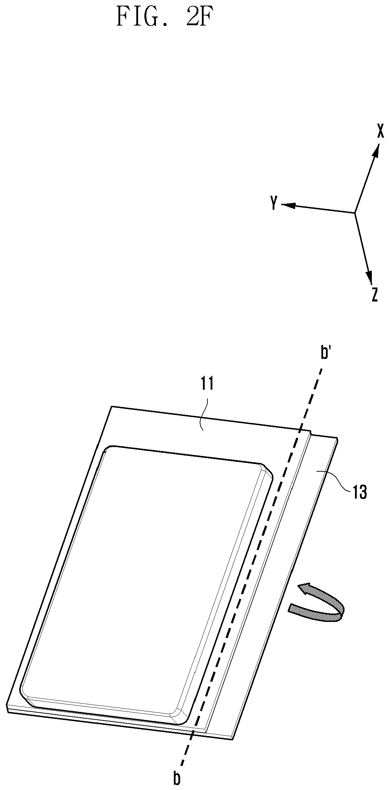

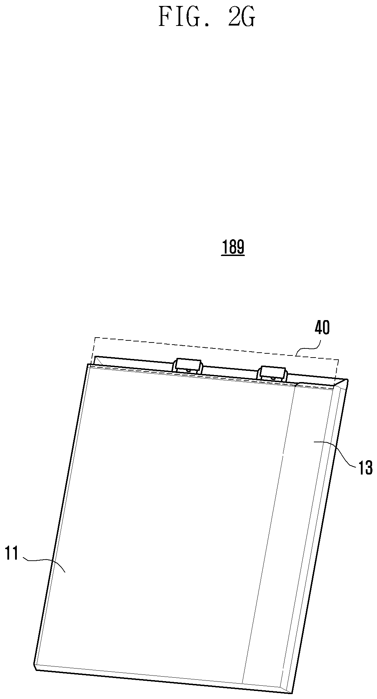

FIG. 2A, FIG. 2B, FIG. 2C, FIG. 2D, FIG. 2E, FIG. 2F, and FIG. 2G are views showing a battery manufacturing process according to various embodiments.

Referring to FIG. 2A, a pouch case (a pouch or an exterior material) 10 is shown. For example, the pouch case 10 may be a vinyl or metal thin film. The pouch case 10 includes an upper surface case (or an upper surface part) 11, a lower surface case (or a lower surface part) 12, and a handle part 13. A battery assembly accommodation part 21 and gas rooms 22a and 22b may be formed in the upper surface case 11. The battery assembly accommodation part 21 accommodates a battery assembly (or a battery cell). Gas generated in the intermediate process of manufacturing a battery 189 (e.g., the battery 189 in FIG. 1) may be collected in the gas rooms 22a and 22b, and the gas rooms may be ultimately removed. The lower surface case 12 may be connected to the upper surface case 11, and the handle part 13 may be connected to the lower surface case 12. The lower surface case 12 and the handle part 13 may not be separate members from the upper surface case 11. In other words, the upper surface case 11, the lower surface case 12, and the handle part 13 may be the same member. The lower surface case 12 may be a part extending in the -x-axis direction from the upper surface case 11, and the handle part 13 may be a part extending in the -y-axis direction from the lower surface case 12. In the document, for an explanation, a part of the pouch case 10 will be referred to as the upper surface case 11, a portion extending from the upper surface case 11 will be referred to as the lower surface case 12, and a portion extending from the lower surface case 12 will be referred to as the handle part 13. In addition, the upper surface case 11 and the lower surface case 12 are referred to for the convenience of explanation, and the upper surface case 11 may also be referred to as the lower surface case and the lower surface case 12 may also be referred to as the upper surface case.

Referring to FIG. 2B, a battery assembly 30 accommodated in the battery assembly accommodation part 21 is shown. The battery assembly (a cell, or a battery cell) 30 may be accommodated in the battery assembly accommodation part 21. The battery assembly 30 may have an electrode formed to protrude to the outside.

Referring to FIG. 2C and FIG. 2D, the lower surface case 12 surrounding the battery assembly 30 is shown.

Referring to FIG. 2C, after when the battery assembly 30 is accommodated in the battery assembly accommodation part 21, the lower surface case 12 may be bent with reference to a bending line (a bending edge) to surround the battery assembly 30 (or the battery assembly accommodation part 21). For example, the lower surface case 12 may be bent 180 degrees so that the inner surface of the lower surface case 12 and the inner surface of the upper surface case 11 are adjacent to each other. The battery assembly 30 and the battery assembly accommodation part 21 may be surrounded by the upper surface case 11 and the lower surface case 12.

Referring to FIG. 2D, the pouch case 10, in which the lower surface case 12 is bent to surround the battery assembly 30 and the battery assembly accommodation part 21, is shown. According to an embodiment, after when the lower surface case 12 is bent to surround the battery assembly 30, the upper surface case 11 and the lower surface case 12 may be sealed. For example, the upper surface case 11 and lower surface case 12 may be sealed by thermo-compression bonding. According to an embodiment, an adhesive member may be included between the upper surface case 11 and the lower surface case 12, and the upper surface case 11 and the lower surface case 12 may be sealed using the adhesive member.

A first edge (or side) 1-1' of the pouch case 10, in which the upper surface case 11 and lower surface case 12 are sealed, may be a bent edge. In addition, the remaining edges 2-2', 3-3', and 4-4' of the pouch case 10 may be cut edge.

Referring to FIG. 2E, the other surface of the pouch case 10 shown in FIG. 2D is shown. The areas of the upper surface case 11 and the lower surface case 12 may be equal to each other (or substantially the same). Since the handle part 13 extends from the lower surface case 12, as shown in FIG. 2E, the handle part 13 may protrude to a region of the upper surface case 11. For example, the handle part 13 is a part extending in the -y-axis direction from the lower surface case 12, the handle part may be protruded in the -y-axis direction from the cut edge of the upper surface case 11. The pouch case 10, which is sealed, may be cut with reference to a cutting line a-a'. For example, the cutting line a-a' may be positioned between the battery assembly accommodation part 21 and the gas rooms 22a and 22b. The portion, which includes the gas rooms 22a and 22b and is cut along the cutting line a-a', may be discarded, and the portion including the battery assembly accommodation part 21 may be manufactured into the battery 189.

Referring to FIG. 2F and FIG. 2G, the pouch case 10, in which the handle part 13 is bent with reference to a bending line b-b', is shown. As mentioned above, since the handle part 13 extends from the lower surface case 12, the handle part may protrude outside the region of the upper surface case 11. The handle part 13 may be bent in the direction (the z-axis and the x-axis direction) of the upper surface case 11 with reference to the bending line b-b'. The bending line b-b' may be positioned within a predetermined distance from the cut edge of the upper surface case 11. For example, the bending line b-b' may coincide with the boundary line of the battery assembly accommodation part 21. Alternatively, the bending line b-b' may be positioned considering a predetermined clearance distance from a boundary line of the battery assembly accommodation part 21.

Referring to FIG. 2G, the battery 189 including the handle part 13 bent toward the upper surface case 11 is shown. The handle part 13 may be bent in the direction (the -z-axis and the y-axis direction) of the upper surface case 11 to surround a region of the upper surface case 11. Since the handle part 13 is a region protruding from the lower surface case 12, the handle part and the lower surface case 12 may be the same layer configured by one layer. As an example, as shown in FIG. 2G, the handle part 13 may be formed to have a length equal to the length of an edge of the upper surface case 11. As an example, the handle part 13 may be formed to have a length shorter than the length of an edge of the upper surface case 11, the edge being surrounded by the handle part 13. As an example, the handle part 13 may be configured by one region or may be configured by multiple regions separated from each other, from an edge of the upper surface case 11, the edge being surrounded by the handle part 13. As an example, the handle part 13 may be formed at an edge in the major axis direction of the lower surface case 12, and may be at an edge of the lower surface case 12, which corresponds to a side edge of the battery assembly 30 accommodated in the battery assembly accommodation part 21.

According to an embodiment, a circuit part 40 may be disposed in an edge region of the pouch case 10, which is oriented in the direction in which the electrode of the battery assembly 30 is disposed, and thus the battery 189 including the circuit part may be manufactured. The battery 189 according to embodiments of the document may include the handle part 13 surrounding a region of the upper surface case 11. The battery 189 may be easily separated from a mechanical member by using the handle part 13. The handle part 13 may be formed to have a predetermined width. As an example, the handle part 13 may be formed to have a width of 1 cm to 5 cm.

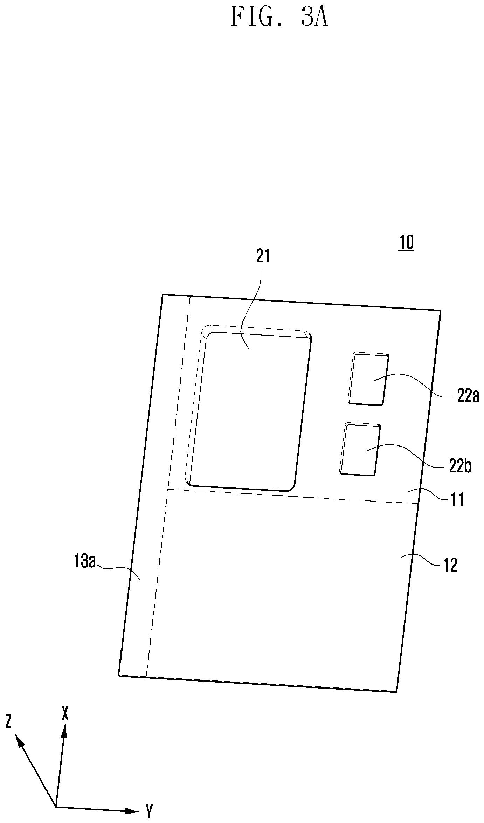

FIG. 3A, FIG. 3B, FIG. 4A, FIG. 4B, FIG. 5A, FIG. 5B, FIG. 5C, FIG. 6A, and FIG. 6B are views showing a handle part according to various embodiments. The handle part 13 may be formed at various positions, and/or formed to have various sizes and/or regions.

Referring to FIG. 3A, the pouch case 10 including a handle part 13a extending from the upper surface case 11 and the lower surface case 12 is shown. The handle part 13a may be a part extending in the -y-axis direction of the upper surface case 11 and lower surface case 12 from the battery assembly accommodation part 21. Similarly to the above-mentioned description, the battery assembly 30 may be accommodated in the battery assembly accommodation part 21 of the upper surface case 11. In addition, the lower surface case 12 may be bent (in the z-axis and x-axis directions) with reference to a bending line to surround the battery assembly 30 (or the battery assembly accommodation part 21). After when the lower surface case 12 is bent to surround the battery assembly 30, the upper surface case 11 and the lower surface case 12 may be sealed using a thermo-compression method and/or an adhesive member. The pouch case 10, which is sealed, may be cut with reference a cutting line (e.g., the line a-a' in FIG. 2E). In addition, the handle part 13a may be bent in the direction (the -z-axis and the y-axis direction) of upper surface case 11 with reference to a bending line (e.g., the line b-b' in FIG. 2F).

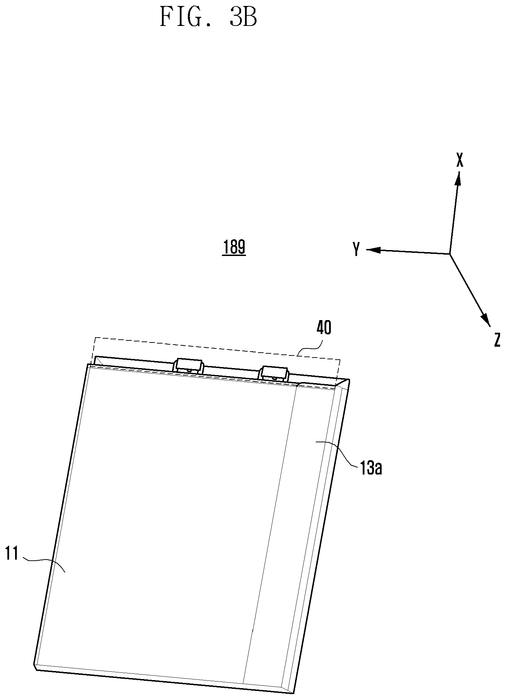

Referring to FIG. 3B, the battery 189 including the handle part 13a bent toward the upper surface case 11 is shown. The handle part 13a may be bent toward the upper surface case 11 to surround a region of the upper surface case 11. As an example, as shown in FIG. 3B, the handle part 13a may be formed to have a length equal to the length of an edge of the upper surface case 11. Since the handle part 13a is a region protruding from the upper surface case 11 and lower surface case 12, the handle part may be configured by two layers. This layout gives the handle part 13a more stability in the folded state as seen in Fig. 3B, as the handle part 13a is bent towards itself.

The battery assembly 30 may have an electrode formed to protrude to the outside. The circuit part 40 may be disposed in an edge region of the pouch case 10, which is oriented in the direction in which the electrode of the battery assembly 30 is disposed, and thus the battery 189 including the circuit part may be manufactured.

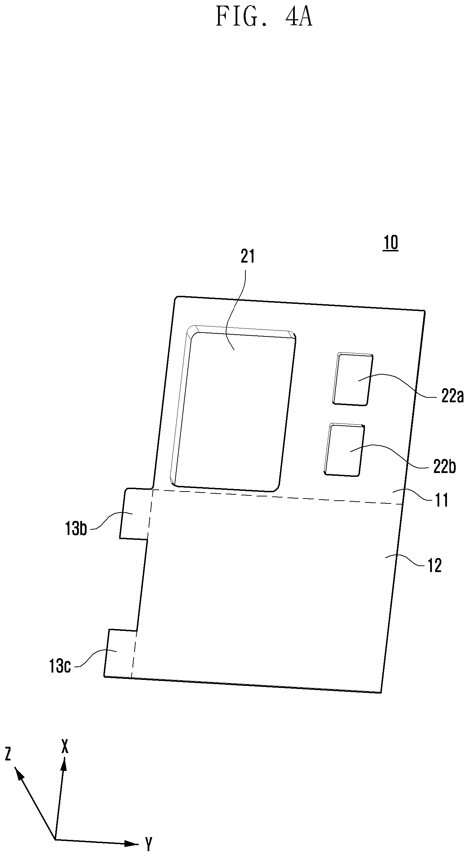

Referring to FIG. 4A, the pouch case 10 including handle parts 13b and 13c extending from the lower surface case 12 is shown. The handle parts13b and 13c may extend to multiple regions in the -y-axis direction from the lower surface case 12. The battery assembly 30 may be accommodated in the battery assembly accommodation part 21 of the upper surface case 11. In addition, the lower surface case 12 may be bent (in the z-axis and x-axis directions) with reference to a bending line to surround the battery assembly 30 (or the battery assembly accommodation part 21). After when the lower surface case 12 is bent to surround the battery assembly 30, the upper surface case 11 and the lower surface case 12 may be sealed using a thermo-compression method and/or an adhesive member. The pouch case 10, which is sealed, may be cut with reference a cutting line (e.g., the line a-a' in FIG. 2E). In addition, the handle parts 13b and 13c may be bent in the direction (the -z-axis and the y-axis direction) of upper surface case 11 with reference to a bending line (e.g., the line b-b' in FIG. 2F).

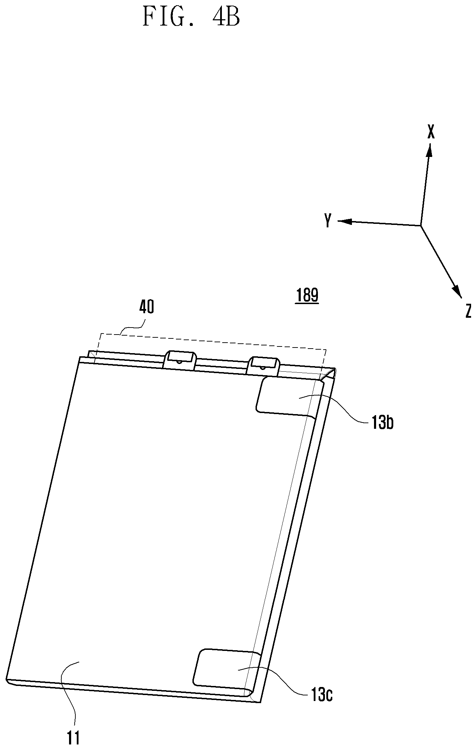

Referring to FIG. 4B, the battery 189 including the multiple handle parts 13b and 13c bent toward the upper surface case 11 is shown. For example, a first handle part 13b and a second handle part 13c may extend to two regions having lengths shorter than the length of a side edge of the lower surface case 12, from the side edge of the lower surface case 12. In case that the lower surface case 12 is bent toward the upper surface case 11, the first handle part 13b and the second handle part 13c may protrude from the side edge of the upper surface case 11. The first handle part 13b and the second handle part 13c may be bent toward the upper surface case 11 with reference to a bending line (e.g., the line b-b' in FIG. 2F) parallel to the side edge of the upper surface case 11. Accordingly, the first handle part 13b and the second handle part 13c may be configured by multiple regions having lengths shorter than the length of an edge of the upper surface case 11. This layout saves additional material as the handle parts 13b and 13c do not extend along the whole side of the lower surface case 12 while still being sufficient to provide force for the removal of the battery at two locations.

The battery assembly 30 may have an electrode formed to protrude to the outside. The circuit part 40 may be disposed in an edge region of the pouch case 10, which is oriented in the direction in which the electrode of the battery assembly 30 is disposed, and thus the battery 189 including the circuit part may be manufactured.

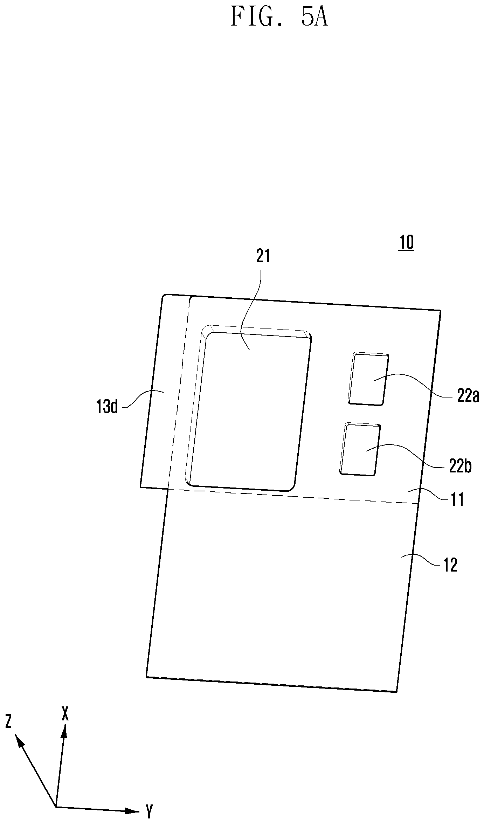

Referring to FIG. 5A, the pouch case 10 including a handle part 13d extending from the upper surface case 11 is shown. The handle part 13d may be a part extending in the -y-axis direction from the lower surface case 12. The battery assembly 30 may be accommodated in the battery assembly accommodation part 21 of the upper surface case 11. In addition, the lower surface case 12 may be bent (in the z-axis and x-axis directions) with reference to a bending line to surround the battery assembly 30 (or the battery assembly accommodation part 21). After when the lower surface case 12 is bent to surround the battery assembly 30, the upper surface case 11 and the lower surface case 12 may be sealed using a thermo-compression method and/or an adhesive member.

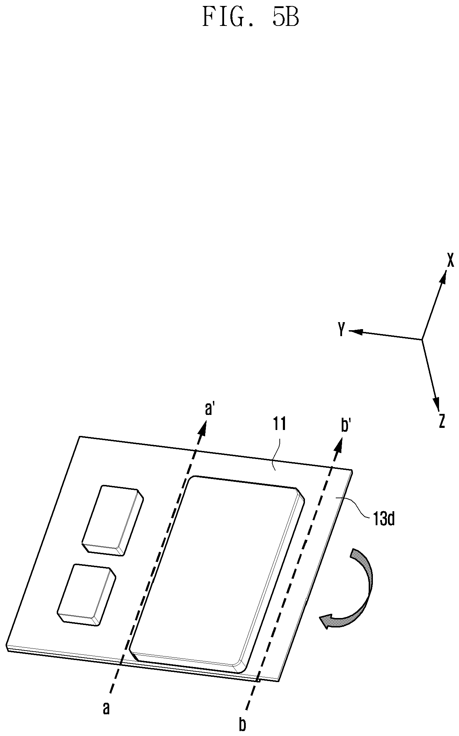

Referring to FIG. 5B, the pouch case 10, in which the upper surface case 11 and lower surface case 12 are sealed with each other, is shown. The pouch case 10, which is sealed, may be cut with reference to the cutting line a-a'. In addition, the handle part 13d may be bent in the direction (the z-axis and the y-axis direction) of the lower surface case 12 with reference to the bending line b-b'. The handle part 13d may be bent toward the lower surface case 12 to surround a region of the lower surface case 12.

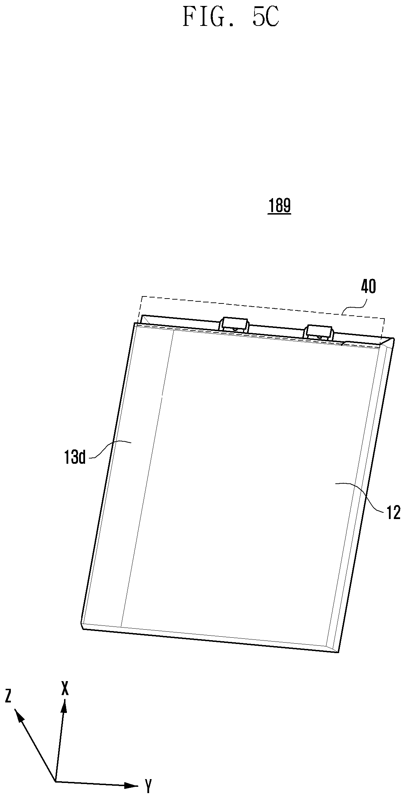

Referring to FIG. 5C, the battery 189 including the handle part 13d bent toward the lower surface case 12 is shown. For example, the handle part 13d may be bent in the direction (the -z-axis and the y-axis direction) of the upper surface case 11. As an example, the direction of the upper surface case 11 may be referred to as the counterclockwise direction. At this time, the handle part 13d may be formed at the right end of a battery with reference to a surface from which the handle part 13d is visible. In addition, the handle part 13d may be bent in the direction (the z-axis and the y-axis direction) of the lower surface case 12. As an example, the direction of the lower surface case 12 may be referred to as the clockwise direction. At this time, the handle part 13d may be formed at the left end of a battery with reference to a surface from which the handle part 13d is visible. In the case of the battery 189 shown in FIG. 5C, since the handle part 13d is bent toward the lower surface case 12, the handle part may be formed at the left end of the battery 189.

The battery assembly 30 may have an electrode formed to protrude to the outside. The circuit part 40 may be disposed in an edge region of the pouch case 10, which is oriented in the direction in which the electrode of the battery assembly 30 is disposed, and thus the battery 189 including the circuit part may be manufactured.

In addition, handle parts may be formed at both sides of a pouch case.

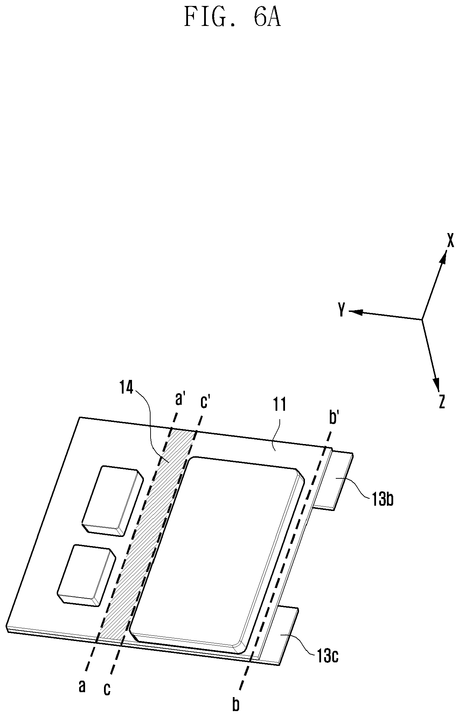

Referring to FIG. 6A, the pouch case 10, in which the upper surface case 11 and lower surface case 12 are sealed with each other, is shown. The pouch case 10, which is sealed, may be cut with reference to the cutting line a-a'. At this time, the cutting line a-a' may be positioned considering a predetermined clearance distance from a boundary line of the battery assembly accommodation part 21 of the upper surface case 11. In addition, the clearance space between the point at which the battery assembly accommodation part 21 is positioned and the cutting line a-a' may be configured by a third handle part 14. In addition, the pouch case 10, which is sealed, may include the first handle part 13b and the second handle part 13c extending from the side of the lower surface case 12, which is opposite to the third handle part 14. The first handle part 13b and the second handle part 13c may protrude from a side edge of the upper surface case 11. The first handle part 13b and the second handle part 13c may be bent in the direction (the -z-axis and the y-axis direction or the counterclockwise direction) of the upper surface case 11 with reference to a first bending line b-b'. In addition, the third handle part 14 positioned at the side opposite to the first handle part 13b and the second handle part 13c may also be bent in the direction (the -z-axis and the -y-axis direction) of the upper surface case 11 with reference to a second bending line c-c'.

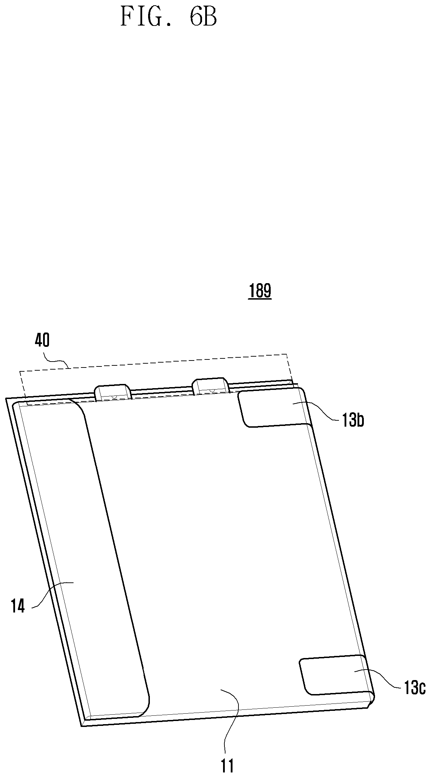

Referring to FIG. 6B, the handle parts 13b, 13c, and 14 configured by three regions at both side edges of the battery 189 are shown. For example, the first handle part 13b and the second handle part 13c may be bent in the direction (the -z-axis and the y-axis direction or the counterclockwise direction) of the upper surface case 11 with reference to the first bending line b-b' parallel to a side edge of the upper surface case 11. Accordingly, the first handle part 13b and the second handle part 13c may be configured by multiple regions having lengths shorter than the length of an edge of the upper surface case in the right edge region of the upper surface case 11. In addition, the third handle part 14 may be bent in the direction (the - z-axis and the -y-axis directions) of the upper surface case with reference to the second bending line c-c' parallel to the other side edge of the upper surface case 11. Therefore, the third handle part 14 may be configured by a region having a length equal to the length of the edge in the left edge region of the upper surface case 11.

The battery assembly 30 may have an electrode formed to protrude to the outside. The circuit part 40 may be disposed in an edge region of the pouch case 10, which is oriented in the direction in which the electrode of the battery assembly 30 is disposed, and thus the battery 189 including the circuit part may be manufactured.

According to an embodiment, the third handle part 14 may be configured by one region having a length equal to the length of the left edge of the upper surface case 11, and the first handle part 13b and the second handle part 13c may be configured by multiple regions having lengths shorter than the length of the right edge of the upper surface case 11. According to an embodiment, the battery 189 may include a circuit part 40 in a side region. The handle parts 13a, 13b, and 14 may be formed at edges of the pouch case 10, which correspond to side edges connected to an edge of the pouch case 10, at which the circuit part 40 is disposed.

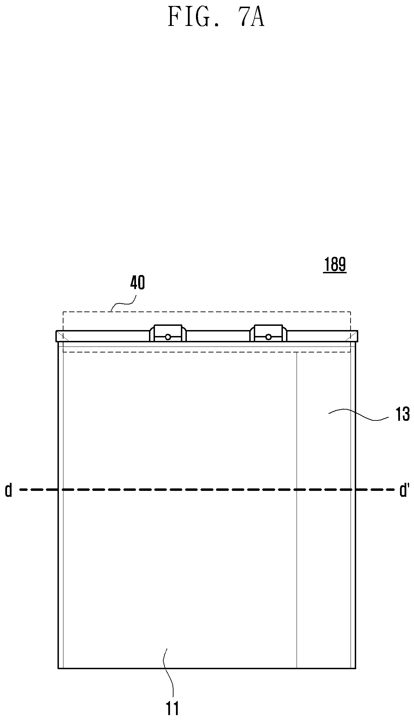

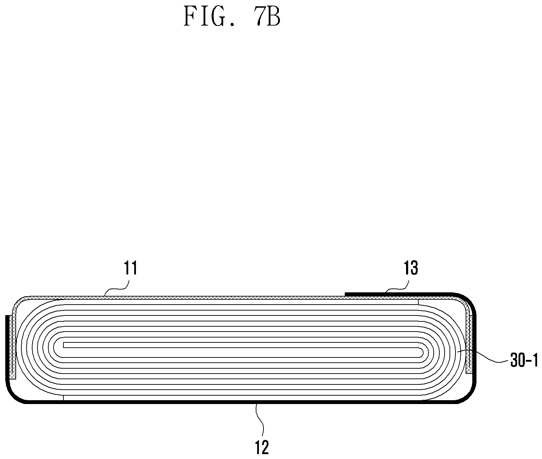

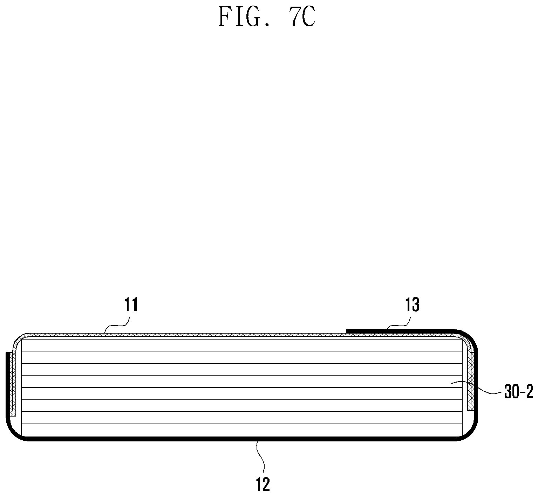

FIG. 7A, FIG. 7B, and FIG. 7C are views showing a cross section of a battery according to various embodiments.

Referring to FIG. 7A, the handle part 13 configured by one region at a side edge (e.g., the right region of the battery 189) of the battery 189 is shown. For example, the handle part 13 may extend from a side edge adjacent to the bent edge of the lower surface case 12. For example, the handle part 13 may extend to have a length substantially equal to the length of a side edge of the lower surface case 12 from the side edge of the lower surface case 12. In case that the lower surface case 12 is bent toward the upper surface case 11, the first handle part 13 extending from the lower surface case 12 may protrude from a side edge of the upper surface case 11. The handle part 13 may be bent in the direction (the -z-axis and the y-axis) of the upper surface case 11 with reference to a bending line (e.g., the line b-b' in FIG. 2F) parallel to a side edge of the upper surface case 11. Accordingly, the handle part 13 may be configured by one region having a length substantially equal to the length of an edge of the upper surface case 11. However, the position, at which the handle part 13 is formed, may be at least one of the four edges of the battery 188, and the handle part may be formed in various numbers and/or shapes.

Referring to FIG. 7B and FIG. 7C, a cross-sectional view taken along line d-d' in FIG. 7A is shown. FIG. 7B shows an example in which a battery assembly 30-1 is a jelly roll. The jelly roll may be rolled in a predetermined direction (e.g., the counterclockwise direction) to form a battery cell. FIG. 7C shows an example in which a battery assembly 30-2 is a stacked cell. The stacked cell may form a battery cell by stacking a positive electrode plate, a negative electrode plate, and a separator. The battery assembly 30-1 or 30-2 may be accommodated in the battery assembly accommodation part 21. One surface of the battery assembly 30-1 or 30-2 may be surrounded by the upper surface case 11, and the other surface thereof may be surrounded by the lower surface case 12. The side surface of the battery assembly 30-1 or 30-2 may be surrounded by bent portions of the upper surface case 11 and the lower surface case 12. The region, in which the upper surface case 11 and the lower surface case 12 of the battery 189 overlap each other, may be sealed using a thermo-compression method, in order to seal the battery assembly 30-1 or 30-2. According to an embodiment, the handle part 13, which is bent, may be formed to extend from a region of the lower surface case 12, and may be positioned on a region of the upper surface case 11. As shown in FIGS. 7A to 7C, the handle part 13 may be formed at an edge of the lower surface case 12, which corresponds to the side surface of the battery assembly 30-1 or 30-2, and may be positioned at an edge of the upper surface case 11, which corresponds thereto.

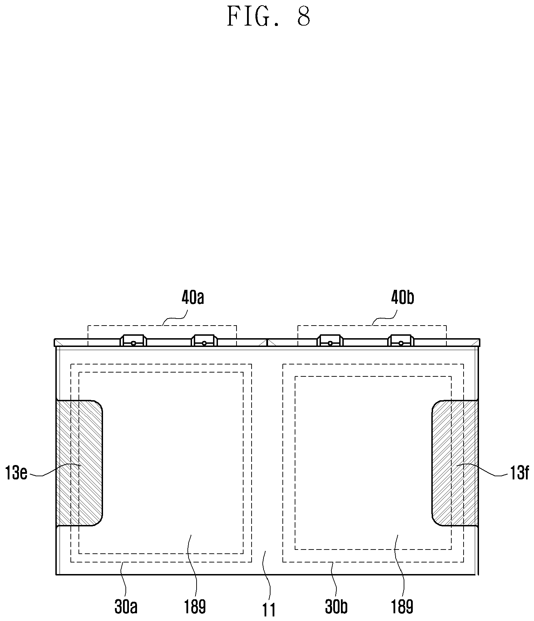

FIG. 8 is a view showing a battery according to various embodiments.

Referring to FIG. 8, the battery 189 including multiple battery assemblies 30a and 30b is shown. A pouch case of the battery 189 may include multiple battery assembly accommodation parts (e.g., the battery assembly accommodation part 21 in FIG. 2A). The multiple battery assembly accommodation parts may accommodate the battery assemblies 30a and 30b, respectively. As an example, the battery assembly 30a or 30b may include the jelly roll 30-1 and/or the stacked cell 30-2. The battery 189 may include multiple circuit parts 40a and 40b corresponding to the battery assemblies 30a and 30b, respectively. Alternatively, the battery 189 may include one circuit part for controlling the multiple battery assemblies 30a and 30b. Handle parts 13e and 13f may be formed at both side edges of the battery 189. As an example, a fourth handle part 13e may be formed at one side edge of the battery 189, at which the first battery assembly 30a is positioned, and a fifth handle part 13f may be formed at the other side edge of the battery 189, at which the second battery assembly 30b is positioned. The fourth handle part 13e and the fifth handle part 13f shown in FIG. 8 are an example, and the fourth handle part 13e and the fifth handle part 13f may be formed in various shapes and/or positions mentioned above.

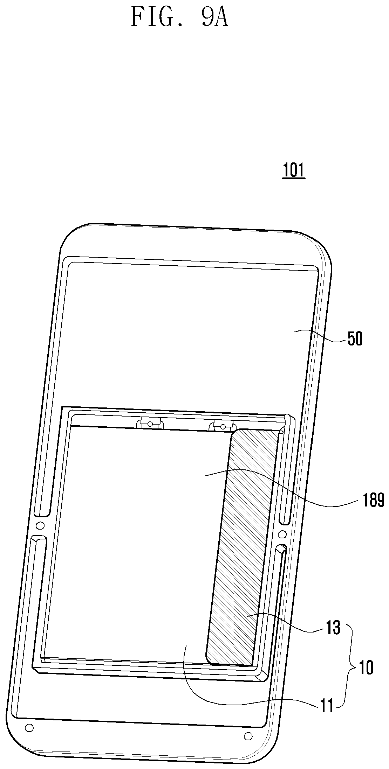

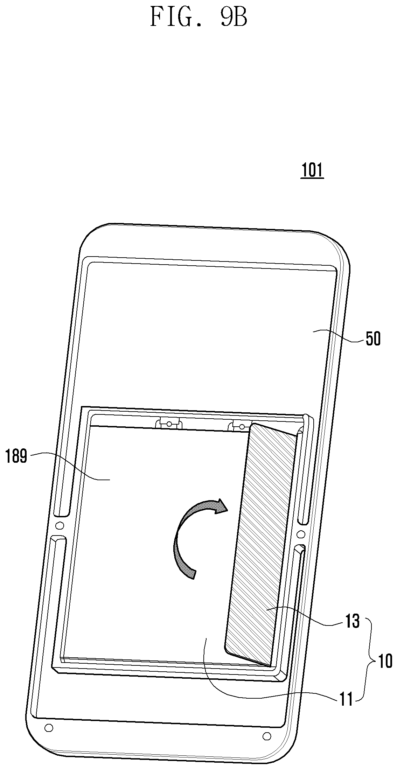

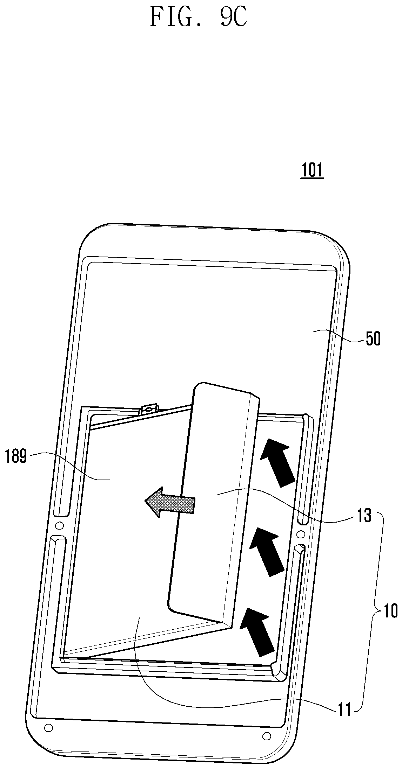

FIG. 9A, FIG. 9B, and FIG. 9C are views showing a process of separating a battery according to various embodiments.

Referring to FIG. 9A, the battery 189 accommodated in a mechanical member 50 of an electronic device 101 (e.g., the electronic device 101 in FIG. 1) is shown. The mechanical member 50 of the electronic device 101 includes a battery accommodation part. The battery 189 may be accommodated in the direction in which the handle part 13 is exposed to the outside from the battery accommodation part. The battery accommodation part may include an adhesive member. The adhesive member may be disposed in the direction in which the battery 189 is accommodated inside the battery accommodation part. The adhesive member may prevent the battery 189 from being unintentionally separated from the battery accommodation part.

Referring to FIG. 9B and FIG. 9C, an example of separating the battery 189 from the mechanical member 50 of the electronic device 101 is shown. The pouch case 10 may include the upper surface case 11, the lower surface case 12, and the handle part 13. The pouch case 10 may be made of a vinyl or metal thin film. Accordingly, the handle part 13 may be separated from the upper surface case 11 by a predetermined force or more. In case that a force is applied in the outward direction of the mechanical member 50 through the spaced handle part 13, the battery 189 may be separated from the mechanical member 50.

An example, in which the upper surface case 11, the lower surface case 12, and the handle part 13 are configured by one case constituting the pouch case 10, has been described so far. However, the upper surface case 11 and the lower surface case 12 may be formed separately from each other. The handle part 13 may be a part extending from the upper surface case 11. In this case, the area of the upper surface case 11 may be greater than the area of the lower surface case 12. Alternatively, the handle part 13 may be a part extending from the lower surface case 12. In this case, the area of the lower surface case 12 may be greater than the area of the upper surface case 11. Alternatively, the handle part 13 may be a part extending from both of the upper surface case 11 and the lower surface case 12. In this case, the area of the upper surface case 11 and the area of the lower surface case 12 may be substantially equal to each other. The upper surface case 11 and the lower surface case 12, which are separately provided, may be compressed using heat and/or an adhesive member. After the upper surface case 11 and lower surface case 12 are compressed, the handle part 13 may be bent in the clockwise direction or the counterclockwise direction to surround the upper surface case 11. For example, the clockwise direction may correspond to the direction (the -z-axis and the y-axis direction, or counterclockwise direction) of the upper surface case 11, and the counterclockwise direction may correspond to the direction of the lower surface case 12.

In addition, the circuit part 40 may be formed in the pouch case 10 in which the upper surface case 11 and lower surface case 12 are compressed, and the battery 189 including the circuit part be manufactured.

According to an embodiment, a battery 189 may include a pouch case 10 including an upper surface case 11 having an accommodation part 21 formed therein to accommodate a battery assembly 30, and a lower surface case 12 which is bent and extends from the upper surface case 11 to surround the accommodation part 21. The upper surface case 11 may include one bent edge bent from the lower surface case 12 and multiple cut edges other than the bent edge. The pouch case 10 may include a handle part 13 extending from an edge of at least one of the upper surface case 11 and the lower surface case 12. The handle part 13 may be bent in a direction to surround a region of the pouch case 10.

According to an embodiment, the handle part 13 may be formed in an edge region of the lower surface case 12, which is oriented in a direction corresponding to at least one of the cut edges of the upper surface case 11.

According to an embodiment, the handle part 13 may be formed to have a length equal to the length of an edge of the pouch case 11, the edge being surrounded by the handle part 13.

According to an embodiment, the handle part 13 may be configured by one region having a length shorter than the length of an edge of the pouch case 10, the edge being surrounded by the handle part 13.

According to an embodiment, the handle part 13 may be configured by multiple regions separated from each other at an edge of the pouch case 10, the edge being surrounded by the handle part 13.

According to an embodiment, the handle part 13 may be formed at an edge in the major axis direction of the lower surface case 12.

According to an embodiment, the handle part 13 may be formed at an edge of the lower surface case 12, which corresponds to a side edge of the battery assembly 30 accommodated in the accommodation part 21.

According to an embodiment, the battery 189 may further include a circuit part 40 configured to control the battery 189 and disposed in an edge region of the pouch case 10. The handle part 13 may be formed at an edge of the lower surface case 12, which corresponds to a side edge of the pouch case 10, the side edge being connected to an edge of the pouch case 10 in which the circuit part is disposed 40.

According to an embodiment, the handle part 13 may be bent in the clockwise direction or the counterclockwise direction to surround a region of the pouch case 10.

According to an embodiment, an electronic device 101 may include a battery 189, and a mechanical member 50 including a battery accommodation part configured to accommodate the battery 189. The battery 189 may include a pouch case 10 including an upper surface case 11 having an accommodation part 21 formed therein to accommodate a battery assembly 30, and a lower surface case 12 surrounding the accommodation part 21. The pouch case 10 may include a handle part 13 extending from an edge of at least one of the upper surface case 11 and the lower surface case 12. The handle part 13 may be bent in a direction to surround a region of the pouch case 10. The lower surface case 12 may be formed to be seated in the battery accommodation part.

According to an embodiment, the handle part 13 of the electronic device 101 may be formed in an edge region of the lower surface case 12, which is oriented in a direction corresponding to at least one of cut edges of the upper surface case 11.

According to an embodiment, the handle part 13 of the electronic device 101 may be formed to have a length equal to the length of an edge of the pouch case 10, the edge being surrounded by the handle part 13.

According to an embodiment, the handle part 13 of the electronic device 101 may be configured by one region having a length shorter than the length of an edge of the pouch case 10, the edge being surrounded by the handle part 13.

According to an embodiment, the handle part 13 of the electronic device 101 may be configured by multiple regions separated from each other at an edge of the pouch case 10, the edge being surrounded by the handle part 13.

According to an embodiment, the handle part 13 of the electronic device 101 may be formed at an edge in the major axis direction of the lower surface case 12.

According to an embodiment, the handle part 13 of the electronic device 101 may be formed at an edge of the lower surface case 12, which corresponds to a side edge of a battery assembly 30 accommodated in the accommodation part 21.

According to an embodiment, the electronic device 101 may further include a circuit part 40 configured to control the battery 189 and disposed in an edge region of the pouch case 10. The handle part 13 may be formed at an edge of the lower surface case 12, which corresponds to a side edge of the pouch case 10, the side edge being connected to an edge of the pouch case 10 in which the circuit part 40 is disposed.

According to an embodiment, the handle part 13 may be bent in the clockwise direction or the counterclockwise direction to surround a region of the pouch case 10.

According to an embodiment, the battery 189 may be accommodated so that the handle part 13 is exposed to the outside from the battery accommodation part.

According to an embodiment, the electronic device 101 may further include an adhesive member disposed in a direction in which the battery 189 is accommodated inside the battery accommodation part.

It should be appreciated that various embodiments of the disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it denotes that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

The effects of the disclosure may not be limited to the above-mentioned effects, and other effects not mentioned may be clearly understood through the above-mentioned descriptions by a person skilled in the art.

## Claims

1. A battery comprising a pouch case,
wherein the pouch case comprises:
an upper surface case having a battery assembly accommodation part formed therein to accommodate a battery assembly; and
a lower surface case which is bent and extends from the upper surface case to surround the battery assembly accommodation part,
wherein the pouch case comprises a handle part extending from an edge of at least one of the upper surface case and the lower surface case, and
wherein the handle part is bent in a direction to surround a region of the pouch case.

2. The battery of claim 1, wherein the upper surface case comprises one bent edge bent from the lower surface case and multiple cut edges other than the bent edge.

3. The battery of claim 2, wherein the handle part is formed in an edge region of the lower surface case, the edge region being oriented in a direction corresponding to at least one of the cut edges of the upper surface case.

4. The battery of claim 1, wherein the handle part is formed to have a length equal to the length of an edge of the pouch case, the edge being surrounded by the handle part.

5. The battery of claim 1, wherein the handle part is configured by one region having a length shorter than the length of an edge of the pouch case, the edge being surrounded by the handle part.

6. The battery of claim 1, wherein the handle part is configured by multiple regions separated from each other at an edge of the pouch case, the edge being surrounded by the handle part.

7. The battery of claim 6, wherein the handle part comprises a first handle part and a second handle part extending to two regions having lengths shorter than the length of a side edge of the lower surface case, from the side edge of the lower surface case.

8. The battery of claim 7, wherein the handle part comprises a third handle part positioned at a side edge opposite to the first handle part and the second handle part.

9. The battery of claim 1, wherein the handle part is formed at an edge in the major axis direction of the lower surface case.

10. The battery of claim 1, wherein the handle part is formed at an edge of the lower surface case, the edge corresponding to a side edge of the battery assembly accommodated in the battery assembly accommodation part.

11. The battery of claim 1, further comprising a circuit part configured to control the battery and disposed in an edge region of the pouch case,
wherein the handle part is formed at an edge of the lower surface case, the edge corresponding to a side edge of the pouch case, the side edge being connected to an edge of the pouch case in which the circuit part is disposed.

12. The battery of claim 1, wherein the handle part is bent in the clockwise direction or the counterclockwise direction to surround a region of the pouch case.

13. The battery of claim 1, wherein the battery assembly is a jelly roll or a stacked cell.

14. The battery of claim 1, wherein the battery comprises a plurality of battery assemblies, and wherein the pouch case comprises a plurality of battery assembly accommodation parts to accommodate the plurality of battery assemblies, respectively.

15. An electronic device comprising:
a battery; and
a mechanical member comprising a battery accommodation part configured to accommodate the battery,
wherein the battery comprises a pouch case comprising:
an upper surface case having a battery assembly accommodation part formed therein to accommodate a battery assembly, and
a lower surface case which is bent and extends from the upper surface case to surround the battery assembly accommodation part,
wherein the pouch case comprises a handle part extending from an edge of at least one of the upper surface case and the lower surface case,
wherein the handle part is bent in a direction to surround a region of the pouch case, and
wherein the lower surface case is formed to be seated in the battery accommodation part.
